# EUROPEAN PATENT SPECIFICATION

(11) **EP 3 276 191 B1**
(45) Date of publication and mention of the grant of the patent: **11.11.2020**
(21) Application number: 16181600.4
(22) Date of filing: 28.07.2016
(51) Int. Cl.: F16C 17/02, F16C 17/04, F16C 33/08, F16C 33/20, F16C 17/03, F16C 17/06

(54) **HYDRODYNAMIC BEARING PAD CONSTRUCTION**
KONSTRUKTION EINES HYDRODYNAMISCHEN LAGERPADS
CONSTRUCTION D'UN COUSSINET HYDRODYNAMIQUE

(43) Date of publication of application: 31.01.2018
(73) Proprietor: GE Renewable Technologies, 38100 Grenoble (FR)
(72) Inventor: Pajaczkowski, Piotr Antoni, 5400 Baden (CH); Berchtold, Olivier, 5400 Baden (CH)
(74) Representative: Brevalex

(56) References cited:
- WO-A1-2008/126362
- WO-A1-2014/002060
- WO-A1-2015/102363
- GB-A- 1 495 248
- JP-A- H09 303 382

## Description

### BACKGROUND OF THE INVENTION

The present invention relates to hydrodynamic generators. It refers to a bearing pad for a hydrodynamic generator according to the preamble of claim 1.

It further refers to a hydrodynamic generator with such a bearing pad.

### PRIOR ART

The present invention relates to bearings of hydrodynamic generators. For example, document WO 2004/001241 A1 discloses a bearing for a rotor of a rotating machine, especially a hydro-generator, which rotates around a vertically rotating axis. Said bearing is embodied as a sliding bearing and comprises first means for axial bearing and second means for radial bearing. Due to said bearing, simplified and improved bearing properties are achieved such that the first and second means are united to form a combined radial and axial bearing which simultaneously comprises axially sliding surfaces and radially sliding surfaces.

Often, polymer-coated bearings are used for this purpose. For example, document WO 2013/178266 A1 discloses a slide bearing, which has a layered structure which is substantially uniform over the circumference thereof and comprises a base, a lead-free slide layer having a thickness which is reduced in edge zones as compared to a central zone between the edge zones, and a polymer coating which is thicker in the edge zones as compared to the central zone, so that the surface level of the coating is substantially flat as seen in axial cross-section. This creates a kind of reservoir of coating material in the edge zones, which is particularly useful for initial wear during a phase, in which the bearing and the shaft get "adjusted to each other". This advantageously increases the resistance to edge seizure and leads to an improved alignment of the shaft, such as a crankshaft, relative to the bearing.

WO 2014/002060 A1 describes a fluid bearing for a journal of a mill, a polymer bearing pad with a recess for receiving lubricating fluid from a base of the fluid bearing and for securely mounting the polymer bearing pad to the base.

The state of the art designs for polymer-coated bearings are based on a mechanical anchoring between the metallic backing and the polymer itself. These designs use either a sintered bronze, a soldered wire mesh or an array of tiny grooves machined in the backing part of the bearing. The common feature of all these solutions is that once such an intermediate layer is created the polymer is pressed into it under high temperature and pressure. This process creates mechanical connection between the metallic and polymer materials. The main drawback of such technology is its high degree of its complexity and consequently cost of the final product. It requires several steps and specialized equipment in order to create the final product. This increases the cost and limits the number of potential suppliers. Such specialized equipment limits the maximum sizes that can be achieved using a given technology. Once both components are bonded, there is no way to disconnect them without destroying the connection so that the polymer layer cannot be replaced in case of sliding surface damage due to wear or bearing seizure.

Typical prior art bonding interfaces that can be found in the industry are shown in Fig. 1 to Fig. 3:
Fig. 1 shows a sectional view of a prior art bearing of the sintered bronze type. A bonding between a metal base 30a and a polymer layer 32a is effected by bonding means 31a in form of a sinter layer.
Fig. 2 shows a sectional view of a prior art bearing of the soldered wire mesh type. Here a bonding between metal base 30b and polymer layer 32b is effected by a bonding means 31b in form of a wire mesh, which is soldered to metal base 30b at one side and embedded in the polymer layer on the other side.
Fig. 3 shows a sectional view of a prior art bearing of the grooves matrix type. Metal base 30c comprises as a bonding means 31c a matrix of grooves, into which the polymer layer 32c engages.

For example, US 6,332,716 B1 discloses a composite bearing in which to a backing metal is bonded to a resin layer in which polytetrafluoroethylene (PTFE) is added to a base resin consisting essentially of polyether ether ketone so that the proportion of polytetrafluoroethylene becomes 0.1 to 50% by weight based on the resin layer and the polytetrafluoroethylene is dispersed in the form of particles in the base resin.

Document US 5,229,198 discloses a low-friction bearing material including a matrix formed by a wire mesh screen which is fused to a metal backing sheet. Polytetrafluoroethylene or other polymeric resin fills the interstices within the screen and between the screen and the backing sheet and locks itself rigidly to the screen and the backing sheet in order to impart high strength to the bearing material.

Document US 2005/0260431 A1 describes a composite material which is to be used in sliding bearings and comprises a metallic support and at least one reinforcement material having an open structure. Said support and reinforcement material are connected to each other by means of a metallic connection. An overlay which is a polyethylene (PE)-based layer is provided on the reinforcement material as an additional layer.

### SUMMARY OF THE INVENTION

It is an object of the present invention to provide a bearing pad, especially for a bearing of a hydrodynamic generator, which is a simplified approach of a polymer plate pad design, which allows to reduce manufacturing costs of the polymer coated pads while enhancing their main advantages, such as high thermomechanical strength and low wear under mixed lubrication regime.

It is another object to provide a hydrodynamic generator with such a bearing pad.

These objects are obtained by a bearing pad according to Claim 1 and a hydrodynamic generator according to Claim 11.

According to the invention a bearing pad for the bearing of a hydrodynamic generator comprises a polymer part and a metal base, which are combined to make up said bearing pad. The bearing pad is characterized in that the polymer part is a separate polymer plate, that the metal base is a backing plate, and that said polymer plate is removable attached to said backing plate.

According to an embodiment of the invention said polymer plate is removable attached with a first side to a second side of said backing plate, a pocket is provided in said second side of said backing plate, and said polymer plate comprises a base plate and an offset protruding from said base plate on said first side, which offset fits into said pocket in said second side of said backing plate.

Said base plate of said polymer plate may project from said offset at all sides such that said offset of said polymer plate is surrounded by a sealing stripe of reduced thickness.

Said polymer plate and said backing plate may have the same edge contour.

The edge of said polymer plate may be offset to the center with respect to the edge of said backing plate.

According to another embodiment of the invention at least one bolt is provided to extend through said backing plate into said polymer plate to fix said polymer plate in its position on said backing plate.

Especially, a plurality of bolts may be provided in a distributed arrangement.

Furthermore, a locking means may be provided at the rim of said polymer plate, which interacts with the sidewall of said pocket of said backing plate.

Especially, said locking means may comprise a key and slot joint extending along the rim of said polymer plate, and at one side of said bearing pad a removable fixing plate may be provided, which allows said polymer plate to be inserted from said one side by being slid in, when said fixing plate is removed, and which closes said pocket and fixes said polymer plate in said pocket in its slid-in position, when said fixing plate is fastened to said backing plate.

Said fixing plate may be fastened to said backing plate by means of fixing screws.

The hydrodynamic generator according to the invention is equipped with a segmented bearing, which comprises a plurality of bearing pads, whereby said bearing pads are configured in accordance with the invention.

In one example of the invention the polymer part is made at least partly of polyetheretherketone (PEEK). PEEK is a preferred material with advantageous properties in terms of material strength making PEEK superior against other polymers. In another example the polymer part is made at least partly of polytetrafluoroethylene (PTFE). The polymer part may be made from a composition of different polymers and different grades of polymers. A further example discloses that the at least one filler is carbon fibers and/or graphite.

### BRIEF DESCRIPTION OF THE DRAWINGS

The present invention is now to be explained more closely by means of different embodiments and with reference to the attached drawings.

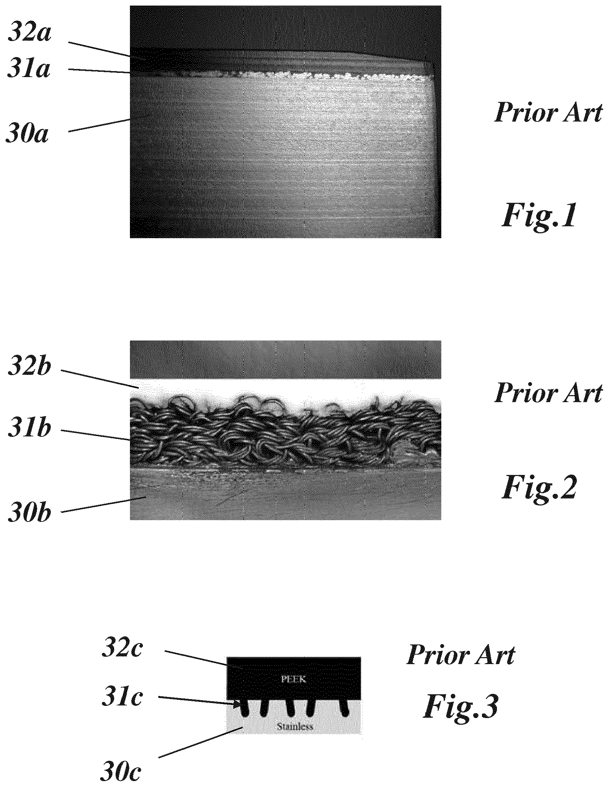

- Fig. 1: shows a sectional view of a prior art bearing of the sintered bronze type;
- Fig. 2: shows a sectional view of a prior art bearing of the soldered wire mesh type;
- Fig. 3: shows a sectional view of a prior art bearing of the grooves matrix type;

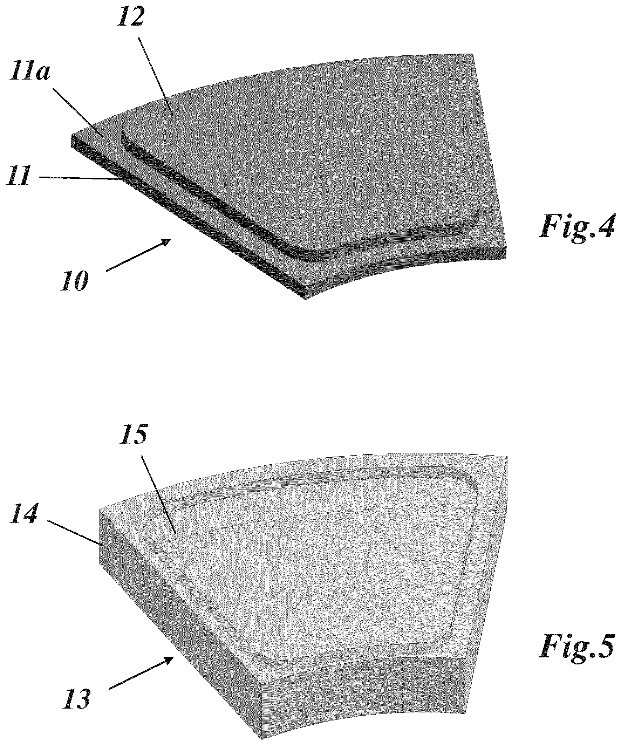

- Fig. 4: shows a perspective side view of a polymer plate according to an embodiment of the invention;
- Fig. 5: shows a perspective side view of a respective backing pad to be removable combined with the polymer plate of Fig. 4;

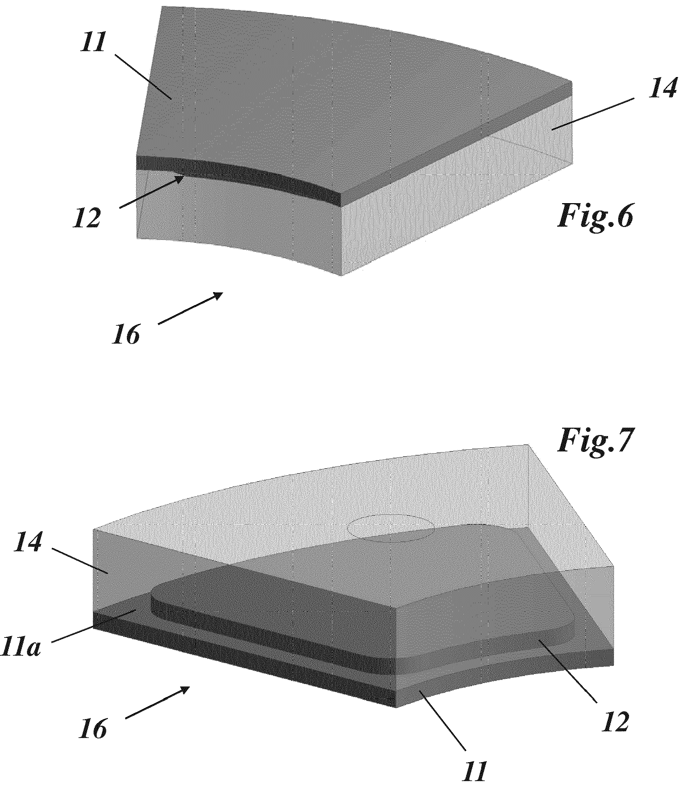

- Fig. 6: shows a perspective side view on the upper side of the bearing pad combining polymer plate of Fig. 4 and backing pad of Fig. 5;
- Fig. 7: shows a perspective side view on the lower side of the bearing pad combining polymer plate of Fig. 4 and backing pad of Fig. 5;

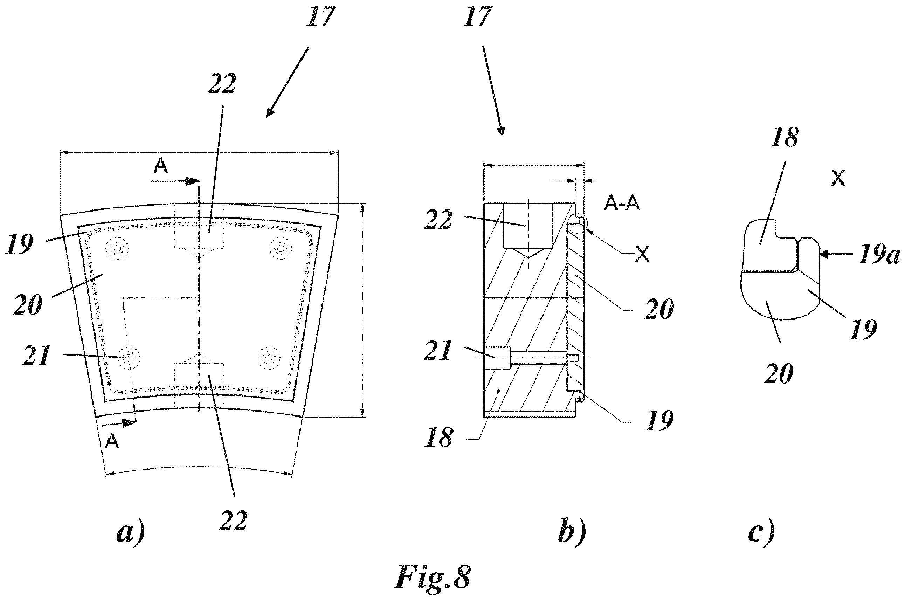

- Fig. 8: shows a bearing pad according to another embodiment of the invention, with Fig. 8(a) being a top view, Fig. 8(b) being a sectional view, and Fig. 8(c) showing a detail of the edge region of the pad; and

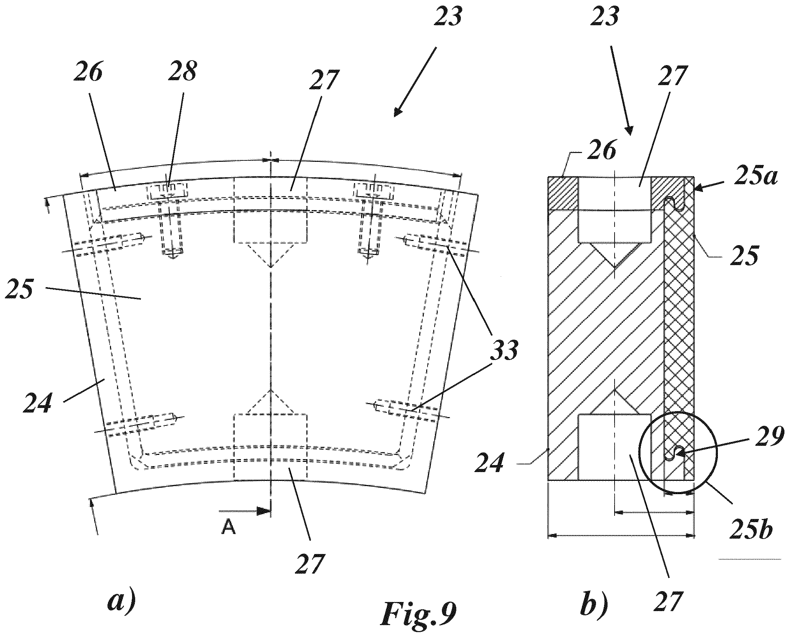

- Fig. 9: shows a bearing pad according to a further embodiment of the invention, with Fig. 9(a) being a bottom view and Fig. 9(b) being a sectional view.

### DETAILED DESCRIPTION OF DIFFERENT EMBODIMENTS OF THE INVENTION

The polymer plate pad design of the present invention is a simplified approach, which allows to reduce manufacturing costs with respect to the polymer coated pads while enhancing their main advantages, such as high thermomechanical strength and low wear under a mixed lubrication regime.

According to the invention the polymer plate is placed in a pocket machined within a steel backing pad. The polymer plate features an offset that fits exactly with the pocket, which results in a firm interlocking connection of both parts. In operation the friction and contact forces around the plate are sufficient to hold the plate in place even under extreme conditions (e.g. bearing seizure).

A second important feature of the polymer plate design according to the invention can be a sealing stripe around the pad border. Due to its lower thickness (higher stiffness) it deforms less (than the thicker plate inside the border) under the lubricating film pressure. This effect allows creating a concave pocket shape of the lubricating film, which maintains the pressure and increases the load carrying capacity of the bearing.

Figs. 4 to 7 show a first embodiment of the bearing pad according to the invention. As the bearing pad 16 of Fig. 6 and 7 is a segment of an annular ring-like bearing the outer contour of the bearing pad 16 is nearly trapezoidal. The main parts of bearing are a polymer plate 10 (Fig. 4) and a metal backing pad 13 (Fig. 5).

Backing pad 13 comprises a backing plate 14 with a pocket 15 being provided on its upper side. Pocket 15, which may be machined away, has in this example a constant depth and extends over most of the area of the upper side of backing plate 14 but is still surrounded by a small rim, where the material of the backing plate 14 has not been removed. However, other configurations of the pocket, especially with a varying depth, are possible within the scope of the present invention.

Polymer plate 10 comprises a base plate 11 of a first thickness with an offset 12 of a second thickness which adds to said first thickness. The edge contour of said offset 12 and the second thickness are such that the offset 12 fits exactly into pocket 15 of backing plate 14, when polymer plate 10 is combined upside down with said backing plate 14 (Fig. 6 and 7). Base plate 11 has the same form and extension as backing plate 14 such that a perfect fit is achieved. The edge contour of offset 12 and pocket 15 has rounded edges to avoid any notch effects.

Offset 12 of polymer plate 10 is surrounded by a small rim of first thickness, which acts as a sealing stripe 11a, when polymer plate 10 and backing plate 14 are combined as shown in Fig. 6. As has been explained before, due to its lower thickness (higher stiffness) it deforms less than the thicker offset part under the lubricating film pressure. This effect allows creating a concave pocket shape of the lubricating film, which maintains the pressure and increases the load carrying capacity of the bearing.

The simple offset polymer plate 10 of Fig. 4 may be fixed on backing plate 14 with glue (not shown) as a backup solution preventing separation in upwards direction.

In addition or as an alternative, in a bearing pad 17 (Fig. 8) the polymer plate 19, 20 with base plate 19, offset 20 and sealing rim 19a may be fixed to backing plate 18 with (four) bolts 21 (at the edges) as a backup solution preventing separation in upwards direction. Stud holes 22 shown in Fig. 8 are used for mounting the bearing pad 17.

Furthermore, as shown in Fig. 9, the bearing pad 23 with polymer plate 25 and its sealing stripe 25a may be removable connected by a locking means 25b, which is provided at the rim of polymer plate 25, and which interacts with the sidewall of said pocket of backing plate 24. Locking means preferably comprises a key and slot joint 29 extending along the rim of polymer plate 25. At one side of bearing pad 23 a removable fixing plate 26 is provided, which allows said polymer plate 25 to be inserted from said one side by being slid in, when fixing plate 26 is removed. Fixing plate 26 then closes said pocket and fixes polymer plate 25 in said pocket in its slid-in position, when fixing plate 26 is fastened to backing plate 24 by means of (two) fixing screws 28. Again, stud holes 27 are provided in backing plate 24 for mounting bearing pad 23. In addition, threaded holes 33 may be provided for an additional fixture of the configuration.

In general, pins, ribs, rivets and other similar joints, either machined or fixed on the base plate, which can prevent the polymer plate to move laterally and to detach from base plate, may be provided within the present invention before introduction of polymer plate, which has to fit to such base plate surface.

Any combination of the variants listed above can be used within the invention. The disclosed bearing pads are applicable for thrust and guide bearings.

In summary, the new solution features separate backing plate and sliding surface components that can be easily separated e.g. during maintenance. The state of the art designs for polymer-coated bearings are based on a mechanical anchoring between the metallic backing and the polymer itself. These designs use either a sintered bronze, a soldered wire mesh or an array of tiny grooves machined in the backing part of the bearing. The common feature of all these solutions is that once such an intermediate layer is created the polymer is pressed into it under high temperature and pressure. Once both components are bonded, there is no way to disconnect them without destroying the connection of the polymer layer cannot be replaced in case of sliding surface damage due to wear or bearing seizure.

Thus, the main advantages of the proposed solution are:
- A simplified design, which leads to lower manufacturing costs, while retaining equal physical properties of the product. The estimated cost reduction equals 50%, based on the prototype costs, compared to the current product.
- Maintenance in case of bearing failure is simplified and accelerated - in case of damage it is only necessary to replace the polymer plate.
- The proposed polymer plate design is easily scalable. The dimensions of the final product are limited only through the maximum dimensions of the raw materials available in the market.
- An important advantage of the proposed polymer plate design is the sealing stripe around the pad border. Due to its lower thickness (higher stiffness) it deforms less (than the thicker plate inside the border) under the lubricating film pressure. This effect allows to create a central concave pocket shape of the lubricating film which maintains the pressure and increases the load carrying capacity of the bearing.
- The manufacturing process is simplified.
- The solution allows easy replacement of the polymer layer in case of bearing failure.

### LIST OF REFERENCE NUMERALS

- 10,19,25: polymer plate
- 11,19: base plate
- 11a: sealing stripe
- 12,20: offset
- 13: backing pad
- 14,18,24: backing plate
- 15: pocket
- 16,17,23: bearing pad
- 19a: sealing stripe
- 21: bolt
- 22,27: stud hole
- 25a: sealing stripe
- 25b: locking means
- 26: fixing plate
- 28: fixing screw
- 29: key and slot joint
- 30a,b,c: metal base
- 31a,b,c: bonding means
- 32a,b,c: polymer layer
- 33: threaded hole

## Claims

1. Bearing pad (16, 17, 23) for the bearing of a hydrodynamic generator, comprising a polymer part (10, 19, 25) and a metal base (14, 18, 24), which are combined to make up said bearing pad (16, 17, 23), the polymer part is a separate polymer plate (10, 19, 25), that the metal base (14, 18, 24) is a backing plate (14, 18, 24), and that said polymer plate (10, 19, 25) is removable attached to said backing plate (14, 18, 24), **characterized in that** said polymer plate (10, 19, 25) is removable attached with a first side to a second side of said backing plate (14, 18, 24), that a pocket (15) is provided in said second side of said backing plate (14, 18, 24), and that said polymer plate (10, 19, 25) comprises a base plate (11, 19) and an offset (12, 20) protruding from said base plate (11, 19) on said first side, which offset (12, 20) fits into said pocket (15) in said second side of said backing plate (14, 18, 24).

2. Bearing pad (16, 17, 23) as claimed in Claim 1, **characterized in that** said base plate (11, 19) of said polymer plate (10, 19, 25) projects from said offset (12, 20) at all sides such that said offset (12, 20) of said polymer plate (10, 19, 25) is surrounded by a sealing stripe (11a) of reduced thickness.

3. Bearing pad (16, 17, 23) as claimed in Claim 2, **characterized in that** said polymer plate (10, 25) and said backing plate (14, 24) have the same edge contour.

4. Bearing pad (16, 17, 23) as claimed in Claim 2, **characterized in that** the edge of said polymer plate (19) is offset to the center with respect to the edge of said backing plate (18).

5. Bearing pad (16, 17, 23) as claimed in Claim 1, **characterized in that** at least one bolt (21) is provided to extend through said backing plate (18) into said polymer plate (19) to fix said polymer plate (19) in its position on said backing plate (18).

6. Bearing pad (16, 17, 23) as claimed in Claim 5, **characterized in that** a plurality of bolts (21) is provided in a distributed arrangement.

7. Bearing pad (16, 17, 23) as claimed in Claim 1, **characterized in that** a locking means (25b) is provided at the rim of said polymer plate (25), which interacts with the sidewall of said pocket of said backing plate (24).

8. Bearing pad (16, 17, 23) as claimed in Claim 7, **characterized in that** said locking means (25b) comprises a key and slot joint (29) extending along the rim of said polymer plate (25), and that at one side of said bearing pad (23) a removable fixing plate (26) is provided, which allows said polymer plate (25) to be inserted from said one side by being slid in, when said fixing plate (26) is removed, and which closes said pocket and fixes said polymer plate (26) in said pocket in its slid-in position, when said fixing plate (26) is fastened to said backing plate (24).

9. Bearing pad (16, 17, 23) as claimed in Claim 8, **characterized in that** said fixing plate (26) is fastened to said backing plate (24) by means of fixing screws (28).

10. Bearing pad (16, 17, 23) as claimed in any of the foregoing Claims, **characterized in that** the polymer part is made at least partly of polyetheretherketone (PEEK).

11. Bearing pad (16, 17, 23) as claimed in any of the foregoing Claims, **characterized in that** the polymer part is made at least partly of polytetrafluoroethylene (PTFE).

12. Bearing pad (16, 17, 23) as claimed in any of the foregoing Claims, **characterized in that** the polymer has at least one filler.

13. Bearing pad (16, 17, 23) as claimed in Claim 12, **characterized in that** at least one filler is carbon fibers and/or graphite.

14. Hydrogenerator with a segmented bearing, which comprises a plurality of bearing pads, **characterized in that** said bearing pads are configured in accordance with one of Claims 1 to 13.

## Patentansprüche

1. Lagersegment (16, 17, 23) für das Lagern eines hydrodynamischen Generators, umfassend einen Polymerteil (10, 19, 25) und einen Metallsockel (14, 18, 24), die kombiniert werden, um das Lagersegment (16, 17, 23) zu bilden, wobei der Polymerteil eine separate Polymerplatte (10, 19, 25) ist, der Metallsockel (14, 18, 24) eine Rückenplatte (14, 18, 24) ist und die Polymerplatte (10, 19, 25) an der Rückenplatte (14, 18, 24) abnehmbar befestigt ist, **dadurch gekennzeichnet, dass** die Polymerplatte (10, 19, 25) mit einer ersten Seite abnehmbar mit einer zweiten Seite der Rückenplatte (14, 18, 24) befestigt ist, dass eine Tasche (15) in der zweiten Seite der Rückenplatte (14, 18, 24) bereitgestellt ist, und dass die Polymerplatte (10, 19, 25) eine Grundplatte (11, 19) und einen Versatz (12, 20) umfasst, der von der Grundplatte (11, 19) an der ersten Seite hervorsteht, wobei der Versatz (12, 20) in die Tasche (15) in der zweiten Seite der Rückenplatte (14, 18, 24) passt.

2. Lagersegment (16, 17, 23) nach Anspruch 1, **dadurch gekennzeichnet, dass** die Grundplatte (11, 19) der Polymerplatte (10, 19, 25) von dem Versatz (12, 20) an allen Seiten derart hervorsteht, sodass der Versatz (12, 20) der Polymerplatte (10, 19, 25) von einem Dichtungsstreifen (11a) mit einer reduzierten Dicke umgeben ist.

3. Lagersegment (16, 17, 23) nach Anspruch 2, **dadurch gekennzeichnet, dass** die Polymerplatte (10, 25) und die Rückenplatte (14, 24) dieselbe Randkontur aufweisen.

4. Lagersegment (16, 17, 23) nach Anspruch 2, **dadurch gekennzeichnet, dass** der Rand der Polymerplatte (19) zur Mitte hin in Bezug auf den Rand der Rückenplatte (18) versetzt ist.

5. Lagersegment (16, 17, 23) nach Anspruch 1, **dadurch gekennzeichnet, dass** mindestens eine Schraube (21) bereitgestellt ist, die sich durch die Rückenplatte (18) in die Polymerplatte (19) erstreckt, um die Polymerplatte (19) in ihrer Position an der Rückenplatte (18) zu fixieren.

6. Lagersegment (16, 17, 23) nach Anspruch 5, **dadurch gekennzeichnet, dass** eine Vielzahl von Schrauben (21) in einer verteilten Anordnung bereitgestellt ist.

7. Lagersegment (16, 17, 23) nach Anspruch 1, **dadurch gekennzeichnet, dass** ein Verriegelungsmittel (25b) an der Kante der Polymerplatte (25) bereitgestellt ist, das mit der Seitenwand der Tasche der Rückenplatte (24) zusammenwirkt.

8. Lagersegment (16, 17, 23) nach Anspruch 7, **dadurch gekennzeichnet, dass** das Verriegelungsmittel (25b) eine Feder-Nut-Verbindung (29) umfasst, die sich entlang der Kante der Polymerplatte (25) erstreckt, und dass an einer Seite des Lagersegments (23) eine abnehmbare Spannplatte (26) bereitgestellt ist, die es der Polymerplatte (25) erlaubt, von der einen Seite durch Einschieben eingesetzt zu werden, wenn die Spannplatte (26) entfernt ist, und welche die Tasche verschließt und die Polymerplatte (26) in der Tasche in ihrer eingeschobenen Position fixiert, wenn die Spannplatte (26) an der Rückenplatte (24) festgemacht ist.

9. Lagersegment (16, 17, 23) nach Anspruch 8, **dadurch gekennzeichnet, dass** die Spannplatte (26) an der Rückenplatte (24) durch Befestigungsschrauben (28) festgemacht wird.

10. Lagersegment (16, 17, 23) nach einem der vorstehenden Ansprüche, **dadurch gekennzeichnet, dass** der Polymerteil mindestens teilweise aus Polyetheretherketon (PEEK) hergestellt ist.

11. Lagersegment (16, 17, 23) nach einem der vorstehenden Ansprüche, **dadurch gekennzeichnet, dass** der Polymerteil mindestens teilweise aus Polytetrafluorethylen (PTFE) hergestellt ist.

12. Lagersegment (16, 17, 23) nach einem der vorstehenden Ansprüche, **dadurch gekennzeichnet, dass** das Polymer mindestens einen Füllstoff aufweist.

13. Lagersegment (16, 17, 23) nach Anspruch 12, **dadurch gekennzeichnet, dass** mindestens ein Füllstoff aus Carbonfasern und/oder Graphit besteht.

14. Hydrogenerator mit einem segmentierten Lager, das eine Vielzahl von Lagersegmenten umfasst, **dadurch gekennzeichnet, dass** die Lagersegmente nach einem der Ansprüche 1 bis 13 konfiguriert sind.

## Revendications

1. Coussinet (16, 17, 23) pour le support d'un générateur hydrodynamique, comprenant une partie en polymère (10, 19, 25) et une base métallique (14, 18, 24), qui sont combinées pour former ledit coussinet (16, 17, 23), la partie en polymère est une plaque en polymère séparée (10, 19, 25), la base métallique (14, 18, 24) est une plaque d'appui (14, 18, 24), et ladite plaque en polymère (10, 19, 25) est fixée de manière amovible à ladite plaque d'appui (14, 18, 24), **caractérisé en ce que** ladite plaque en polymère (10, 19, 25) est fixée de manière amovible par un premier côté à un second côté de ladite plaque d'appui (14, 18, 24), **en ce qu'**une poche (15) est prévue dans ledit second côté de ladite plaque d'appui (14, 18, 24), et **en ce que** ladite plaque en polymère (10, 19, 25) comprend une plaque de base (11, 19) et un déport (12, 20) faisant saillie depuis ladite plaque de base (11, 19) sur ledit premier côté, ledit déport (12, 20) s'adapte dans ladite poche (15) dans ledit second côté de ladite plaque d'appui (14, 18, 24).

2. Coussinet (16, 17, 23) selon la revendication 1, **caractérisé en ce que** ladite plaque de base (11, 19) de ladite plaque en polymère (10, 19, 25) fait saillie depuis ledit déport (12, 20) au niveau de tous les côtés de telle sorte que ledit déport (12, 20) de ladite plaque en polymère (10, 19, 25) est entouré par une bande d'étanchéité (11a) d'épaisseur réduite.

3. Coussinet (16, 17, 23) selon la revendication 2, **caractérisé en ce que** ladite plaque en polymère (10, 25) et ladite plaque d'appui (14, 24) ont le même profil de contour.

4. Coussinet (16, 17, 23) selon la revendication 2, **caractérisé en ce que** le bord de ladite plaque en polymère (19) est déporté vers le centre par rapport au bord de ladite plaque d'appui (18).

5. Coussinet (16, 17, 23) selon la revendication 1, **caractérisé en ce qu'**au moins un boulon (21) est prévu pour s'étendre à travers ladite plaque d'appui (18) dans ladite plaque en polymère (19) pour fixer ladite plaque en polymère (19) dans sa position sur ladite plaque d'appui (18).

6. Coussinet (16, 17, 23) selon la revendication 5, **caractérisé en ce qu'**une pluralité de boulons (21) est prévue dans un agencement distribué.

7. Coussinet (16, 17, 23) selon la revendication 1, **caractérisé en ce qu'**un moyen de verrouillage (25b) est prévu au niveau de la bordure de ladite plaque en polymère (25), qui interagit avec la paroi latérale de ladite poche de ladite plaque d'appui (24).

8. Coussinet (16, 17, 23) selon la revendication 7, **caractérisé en ce que** ledit moyen de verrouillage (25b) comprend une clé et un joint à fente (29) s'étendant le long de la bordure de ladite plaque en polymère (25), et **en ce qu'**au niveau d'un côté dudit coussinet (23) une plaque de fixation amovible (26) est prévue, ce qui permet à ladite plaque en polymère (25) d'être insérée depuis ledit un côté en étant enfichée, lorsque ladite plaque de fixation (26) est retirée, et qui ferme ladite poche et fixe ladite plaque en polymère (26) dans ladite poche dans sa position enfichée, lorsque ladite plaque de fixation (26) est fixée à ladite plaque d'appui (24).

9. Coussinet (16, 17, 23) selon la revendication 8, **caractérisé en ce que** ladite plaque de fixation (26) est fixée à ladite plaque d'appui (24) au moyen de vis de fixation (28).

10. Coussinet (16, 17, 23) selon l'une quelconque des revendications précédentes, **caractérisé en ce que** la partie en polymère est constituée au moins en partie de polyétheréthercétone (PEEK).

11. Coussinet (16, 17, 23) selon l'une quelconque des revendications précédentes, **caractérisé en ce que** la partie en polymère est constituée au moins en partie de polytétrafluoroéthylène (PTFE).

12. Coussinet (16, 17, 23) selon l'une quelconque des revendications précédentes, **caractérisé en ce que** le polymère a au moins une charge.

13. Coussinet (16, 17, 23) selon la revendication 12, **caractérisé en ce qu'**au moins une charge est des fibres de carbone et/ou du graphite.

14. Hydrogénérateur doté d'un palier segmenté, qui comprend une pluralité de coussinets, **caractérisé en ce que** lesdits coussinets sont configurés selon l'une des revendications 1 à 13.
